Europäisches Patentamt

(19) European Patent Office

Office européen des brevets

(11) Veröffentlichungsnummer: **0 033 839**
**B1**

(12) **EUROPÄISCHE PATENTSCHRIFT**

(45) Veröffentlichungstag der Patentschrift:
29.05.85

(51) Int. Cl.⁴: **B 60 G 17/04, F 16 F 9/50**

(21) Anmeldenummer: 81100108.0

(22) Anmeldetag: 09.01.81

(54) Selbstpumpendes hydropneumatisches Teleskop-Feder-Dämpferelement mit innerer Niveauregelung.

(30) Priorität: 06.02.80 DE 3004307

(43) Veröffentlichungstag der Anmeldung:
19.08.81 Patentblatt 81/33

(45) Bekanntmachung des Hinweises auf die Patenterteilung:
29.05.85 Patentblatt 85/22

(84) Benannte Vertragsstaaten:
FR GB IT SE

(56) Entgegenhaltungen:
DE - A - 2 551 516
DE - C - 1 245 031
DE - C - 1 630 107
DE - C - 2 519 922
FR - A - 1 480 718
FR - A - 1 510 195

(73) Patentinhaber: Boge GmbH, Bogestrasse 50,
D-5208 Eitorf/Sieg (DE)

(72) Erfinder: Knecht, Heinz, Hombacher Strasse 28,
D-5208 Eitorf/Sieg (DE)
Erfinder: Kohberg, Ewald, Waldweg,
D-5208 Eitorf-Irlenborn (DE)
Erfinder: Löhr, Karl-Heinz, Asbacher Strasse 86,
D-5208 Eitorf/Sieg (DE)
Erfinder: Meller, Theo, Dr.-Ing., Zum Höhenstein 47,
D-5208 Eitorf/Sieg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf ein selbstpumpendes hydropneumatisches Teleskop-Feder-Dämpferelement mit innerer Niveauregelung für Fahrzeuge, insbesondere Kraftfahrzeuge, mit einem Arbeitszylinder mit einem ölgefüllten Arbeitsraum mit einem darin verschiebbar gelagerten, mit Dämpfungseinrichtungen versehenen Arbeitskolben am Ende einer abgedichtet aus dem Arbeitszylinder herausgeführten hohlen Kolbenstange, einem in einem mit dem Arbeitsraum in Verbindung stehenden Gasfederraum angeordneten, das Öl im Arbeitsraum unter Druck setzenden Gaspolster, einem, insbesondere den Arbeitsraum umgebenden, durch ein äußeres Mantelrohr begrenzten Ölvorratsraum mit freier Oberfläche zwischen Öl und Gas und einer an einer Zwischenwand elastisch gelagerten hohlen Pumpenstange, die an ihrem einen Ende mit dem Ölvorratsraum unterhalb von dessen Ölspiegel in Verbindung steht und an ihrem anderen, mit einem Pumpen-Saugventil versehenen Ende mit einem in der hohlen Kolbenstange angeordneten Pumpenraum zur Niveauregelung zusammenwirkt, indem sie in Abhängigkeit von den Ein- bzw. Ausfederungsbewegungen Öl aus dem Ölvorratsraum in den Arbeitsraum fördert, während bei Überschreitung des Sollniveaus Öl aus dem Arbeitsraum in den Ölvorratsraum, insbesondere durch eine in der Pumpenstange vorgesehene Steueröffnung, abfließen kann, wobei ein Pumpen-Auslaßventil an dem von der Zwischenwand entfernten Ende des Pumpenraums in einer Steuerhülse angeordnet ist, die sich im Kolbenstangenhohlraum zwischen Kolbenstange und Pumpenstange befindet, mit der Kolbenstange vom Pumpen-Auslaßventil bis zum Arbeitsraum führende Durchtrittskanäle bildet und deren der Zwischenwand zugekehrtes Ende insbesondere eine Steuerkante für die Steueröffnung bildet, und wobei im Gasfederraum im Bereich der Oberfläche zwischen Öl und Gas ein Trennkörper aus massivem Werkstoff beweglich angeordnet ist.

Aus der DE-PS 1 630 107 ist ein dem vorstehend beschriebenen Teleskop-Feder-Dämpferelement mit innerer Niveauregelung ähnlicher Stoßdämpfer bekannt. Bei diesem bekannten Stoßdämpfer ist jedoch der im Gasfederraum befindliche Trennkörper zwischen Öl und Gas als Trennmembran ausgebildet. Eine derartige Trennmembran ergibt grundsätzlich immer eine merkliche Diffusion zwischen den voneinander zu trennenden Medien, was die Funktionsweise des niveauregelnden Feder-Dämpferelements ungünstig beeinflußt. Weiterhin ist bei diesem bekannten Feder-Dämpferelement die elastische Pumpenstangenaufhängung, welche zur Vermeidung eines nachteiligen rechteckigen Pumpendiagramms vorgesehen ist, dadurch gebildet, daß das aufzuhängende Pumpenstangenende als Gummimetallteil ausgebildet, welches in einer in der Zwischenwand vorgesehenen besonderen Kammer gelagert ist. Dies ist nicht nur technisch besonders aufwendig, sondern ergibt auch eine axial längere Bauweise des Feder-Dämpferelements.

Schließlich ist eine Montage des aus der genannten DE-PS bekannten niveauregelnden Feder-Dämpferelements mit oben angeordneter Kolbenstange nicht möglich, zumal das Pumpen-Auslaßventil im Bereich des Arbeitskolbens angeordnet ist und somit aufgrund des im Ölvorratsraum befindlichen Gases ein bleibendes Gaspolster im Pumpenraum entstehen würde, welches ein weiteres Pumpen von Öl praktisch verhindern würde.

Bei dem Feder-Dämpferelement von der eingangs beschriebenen Gattung gemäß der DE-PS 2 519 922 ist zwar ein Einbau im Fahrzeug mit oben angeordneter Kolbenstange möglich. Jedoch ist bei diesen bekannten Feder-Dämpferelement der Trennkörper aus massivem Werkstoff zur Trennung von Gas und Öl im Gasfederraum durch eine den Arbeitszylinder umgebende besonders verwickelt gestaltete stufenförmige Hülsenanordnung mit je einem ringförmigen oberen besonders engen Gasdurchtrittskanal und einem unteren Öldurchtrittskanal gebildet, wobei die beiden Durchtrittskanäle an ihren einander zugekehrten Enden mit dem Arbeitsraum in Verbindung stehen. Hierdurch ergibt sich nicht nur ein besonders hoher konstruktiver Aufwand, sondern infolge dieser Trenn-Hülsenanordnung nebst Durchtrittskanälen würde dieses bekannte Feder-Dämpferelement bei Einbau mit unten angeordneter Kolbenstange wiederum überhaupt nicht funktionieren.

Ferner erfolgt bei diesem bekannten Feder-Dämpferelement die Befestigung der im Kolbenstangenhohlraum befindlichen Steuerhülse im Bereich des Arbeitskolbens mittels einer besonderen technisch aufwendigen Lagerungsanordnung. Im übrigen wird unterstellt, daß bei diesem bekannten Feder-Dämpferelement die im einzelnen nicht gezeigte elastische Pumpenstangenlagerung entsprechend der aus der DE-PS 1 630 107 bekannten Pumpenstangenlagerung ausgebildet ist.

Somit ergibt sich bei dem Feder-Dämpferelement gemäß der DE-PS 2 519 922 insbesondere aufgrund der Hülsenanordnung zur Trennung von Gas und Öl, der Lagerung der im Kolbenstangenhohlraum angeordneten Steuerhülse sowie der elastischen Pumpenstangenaufhängung außer dem beträchtlichen technischen Aufwand auch eine axial längere Bauweise, d. h. also eine größere Fixlänge des Feder-Dämpferelements. Diese sowie weitere Nachteile der bekannten Feder-Dämpferelemente mit innerer Niveauregelung bedingen, daß diese für eine Großserienfertigung ungeeignet sind. Im übrigen lassen auch die Vielgestaltigkeit der heutigen Achsanordnungen im Personenkraftwagen-, Kombi- und Lastkraftwagenbau im Hinblick auf den tatsächlichen vorhandenen Einbauraum für die Feder-Dämpferelemente der zur Rede stehenden Gattung, die unterschiedlichen Übersetzungsverhältnisse der Anlenkungen, sowie die Notwendigkeit, vielfältige Eigenschwingungszahlen zu realisieren, nur eine begrenzte Anwendbarkeit der bekannten Feder-Dämpferelemente mit innerer Niveauregelung zu.

Der vorliegenden Erfindung liegt die Aufgabe zugrunde, ein einfaches und wirksames selbstpumpendes hydropneumatisches Teleskop-Feder-Dämpferelement mit innerer Niveauregelung zu schaffen, welches die Nachteile der bekannten Feder-Dämpferelemente vermeidet und insbesondere konstruktiv einfacher ist, eine kürzere axiale Fixlänge hat, und lageunabhängig montierbar ist derart, daß seine Herstellung in Großserie wirtschaftlich realisierbar ist. Dabei soll das zu schaffende Feder-Dämpferelement entsprechend den heutigen Forderungen im Fahrzeugbau vielseitig anwendbar sein.

Diese Aufgabe wird bei einem Teleskop-Feder-Dämpferelement mit innerer Niveauregelung von der eingangs beschriebenen Gattung erfindungsgemäß dadurch gelöst, daß die Zwischenwand selbst im Bereich des Arbeitsraums elastisch ausgebildet ist und ein Pumpen-Ansaugrohr zur Verbindung des Pumpenstangen-Hohlraums mit dem Ölvorratsraum unterhalb des Ölspiegels trägt, welches gegenüber den Bewegungen der Zwischenwand nachgiebig ausgebildet ist.

Es bedarf keiner näheren Erläuterung, daß ein Feder-Dämpferelement mit innerer Niveauregelung nach der Erfindung technisch einfacher aufgebaut ist und grundsätzlich auch im Hydraulikteil kürzer baut als die bekannten Stoßdämpfer der zur Rede stehenden Gattung. Infolge seines Gesamtaufbaus ist sichergestellt, daß beim Einbau sowohl mit unten als auch mit oben angeordneter Kolbenstange kein bleibendes Gaspolster im Pumpenraum entsteht, wodurch eine lageunabhängige Einbauweise des erfindungsgemäßen Teleskop-Feder-Dämpferelements ermöglicht wird. Dabei ist das Feder-Dämpferelement nach der Erfindung vielseitig anwendbar. Infolge der technischen Einfachheit und Kompaktheit sowie der lageunabhängigen Montierbarkeit ist auch die Herstellbarkeit des niveauregelnden Feder-Dämpferelements in Großserie wirtschaftlich realisierbar.

Aus der DE-PS 1 254 031, insbesondere Fig. 2 ist es zwar grundsätzlich bekannt, einen Gasfederraum, welcher einen an seinem Umfang abgedichtet geführten Trennkolben enthält, im Bereich einer eine Pumpenstange abstützenden Zwischenwand axial an einen Arbeitsraum anzuschließen, wobei der Gasfederraum mit dem Arbeitsraum über eine in der Zwischenwand befindliche Durchtrittsöffnung verbunden ist. Diese bekannte Anordnung besitzt jedoch im übrigen einen gegenüber dem erfindungsgemäßen niveauregelnden Teleskop-Feder-Dämpferelements weitgehend unterschiedlichen Aufbau. Insbesondere ist bei der bekannten Anordnung die Zwischenwand starr ausgebildet, ferner weist der im Arbeitskolben verschieblich geführte Arbeitskolben keine Dämpfungseinrichtungen, insbesondere Dämpfungsventile auf usw. Diese Literaturstelle konnte somit zur vorliegenden Erfindung gleichfalls nichts beitragen.

Gemäß einer besonders bevorzugten Ausführungsform der Erfindung ist die Zwischenwand im Bereich des Arbeitsraums als Blattfederwand um das Pumpen-Ansaugrohr zwischen seinen Befestigungen an der Zwischenwand einerseits und dem Ölvorratsraum andererseits als senkrecht zur Stoßdämpfer-Achse verlaufende Rohrspirale ausgebildet. Hierdurch ergibt sich eine besonders einfache und kompakte Bauweise.

Eine ebenfalls einfache Bauweise ergibt sich, wenn die beiden Befestigungen des Pumpenansaugrohrs als abgedichtete Steckverbindungen ausgebildet sind.

Vorteilhafterweise ist auch die Befestigung der Steuerhülse im Kolbenstangen-Hohlraum als abgedichtete Steckverbindung ausgebildet, wobei das von der Zwischenwand abgekehrte Ende der Steuerhülse außerhalb des Pumpen-Auslaßventils eine Umfangsdichtung gegenüber dem Kolbenstangen-Hohlraum aufweist und stirnseitig gegen die benachbarte Stirnwand des Kolbenstangen-Hohlraums anliegt, welcher dort eine endständige Entlüftungsöffnung aufweist.

Im Sinne einer einfachen Herstellung ist auch die Befestigung des den Ölvorratsraum abschließenden Bereichs der Zwischenwand im Mantelrohr mit Vorteil als abgedichtete Steckverbindung ausgebildet. Entsprechend ist vorteilhafterweise die Befestigung wenigstens eines der beiden endständigen Abschlußteile (Deckel und Boden) des Stoßdämpfers im Mantelrohr als abgedichtete Steckverbindung ausgebildet.

Die Vorteile der Erfindung kommen in ganz besonderem Maße zur Geltung, wenn gemäß einer Weiterbildung der Erfindung das Teleskop-Feder-Dämpferelement als Baukastensystem aufgebaut ist, wobei der den Arbeitsraum enthaltende Arbeitszylinder nebst zugehörigen Funktions-Baugruppen, insbesondere Arbeitskolben mit Zug- und Druckdämpfungsventil, Kolbenstange mit Pumpenraum, Steuerhülse mit Pumpen-Auslaßventil, Pumpenstange mit Pumpen-Saugventil, Kolbenstangen-Führungs- und Dichtungskomplex, als gleichbleibende Standard-Baugruppe ausgebildet ist und die übrigen Funktions-Baugruppen, insbesondere Ölvorratsraum, Gasfederraum mit Trennkolben, als entsprechend dem jeweiligen Anwendungsfall in Größe und/oder räumlicher Anordnung variable Baugruppen ausgebildet sind.

Dabei kann der Gasfederraum mit Trennkolben den Ölvorratsraum bzw. den Arbeitszylinder zumindest teilweise umgeben. Ferner können der Gasfederraum mit Trennkolben und/oder der Ölvorratsraum als gegenüber der Standard-Baugruppe separat angeordnete Baugruppen mit dem Arbeitsraum durch jeweils eine Rohrleitung verbindbar sein.

Die Merkmale eines derartigen erfindungsgemäßen Baukastensystems, welche sich die konstruktive Einfachheit, Kompaktheit und lageunabhängige Montierbarkeit des Feder-Dämpferelements nach der Erfindung zunutze machen, ermöglichen eine praktisch uneingeschränkte Anwendung des Feder-Dämpferelements im Fahrzeugbau. Insbesondere ergibt sich durch diese Weiterbildung der Erfindung eine äußerst gute Anpassungsfähigkeit des Feder-Dämpferelements an den im jeweiligen Fahrzeug tatsächlich vorhandenen Einbauraum. Ferner ist ein derartiges erfindungsgemäßes Feder-Dämpferelement variabel in der Federkennlinienauslegung unter Berücksichtigung festliegender Übersetzungsverhältnisse (Radweg zu Federbeinweg) der Achs-/Federbein-Anlenkungen. Es bedarf keiner näheren Erläuterung, daß sich durch ein derartiges Baukastensystem auch eine einfache und wirtschaftliche Herstellbarkeit in Großserien des niveauregelnden Stoßdämpfers ergibt.

Der Ordnung halber sei noch darauf hingewiesen, daß die in den Ölvorratsraum eintauchende Länge des Pumpen-Ansaugrohrs entsprechend dem jeweiligen Anwendungsfall zu wählen ist. Dies bedeutet, daß diese eintauchende Länge beim Einbau des Feder-Dämpferelements mit unten angeordneter Kolbenstange maximal, hingegen beim Einbau mit oben angeordneter Kolbenstange minimal ist.

Die Erfindung wird nachstehend anhand von in der Zeichnung schematisch dargestellten Ausführungsbeispielen näher erläutert. Es zeigt

Fig. 1 einen axialen Längsschnitt durch ein erfindungsgemäßes niveauregelndes Teleskop-Feder-Dämpferelement, insbesondere für einen Einbau mit unten angeordneter Kolbenstange,

Fig. 2 im vergrößerten Detail die elastische Pumpenstangenaufhängung nebst Pumpen-Ansaugrohr des Feder-Dämpferelements nach Fig. 1,

Fig. 3 im vergrößerten Detail das gegenüberliegende Pumpenstangenende nebst Steuerhülse mit Pumpen-Auslaßventil,

Fig. 4 bis 9 in noch weiter schematisierter Darstellung verschiedene Ausführungsformen des nach dem Baukastensystem aufgebauten niveauregelnden Feder-Dämpferelements nach der Erfindung und Fig. 6a und 9a im vergrößerten Detail Einzelteile der Ausführungsformen nach den Fig. 6 und 7 bzw. 9.

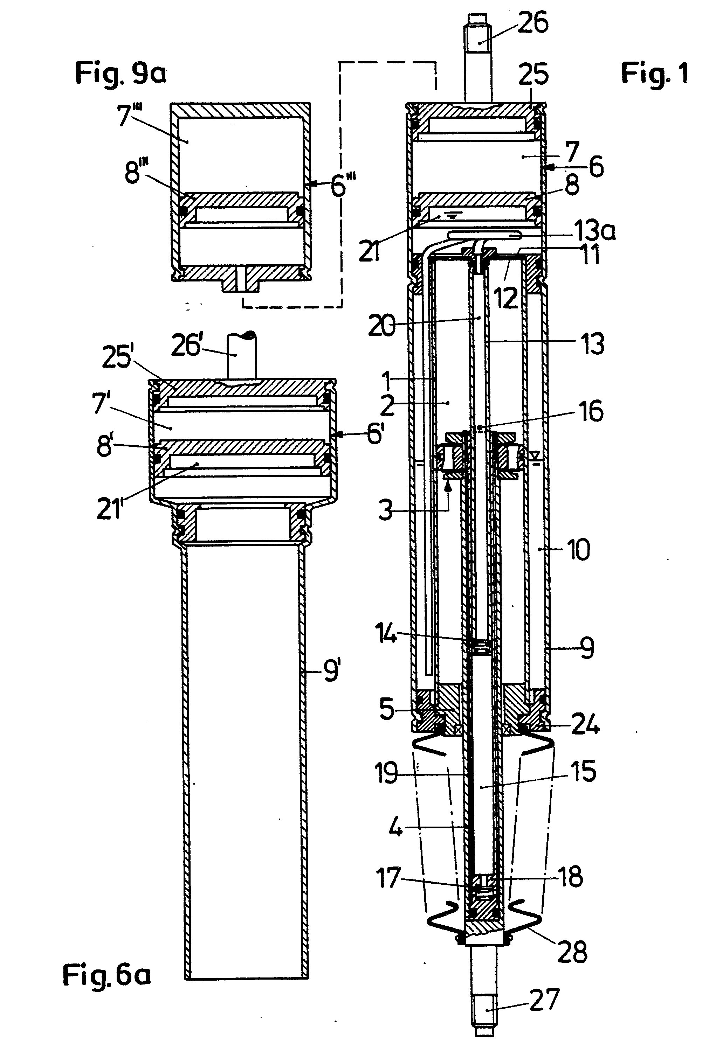

Das niveauregelnde Teleskop-Feder-Dämpferelement nach Fig. 1 weist einen Arbeitszylinder 1 mit einem ölgefüllten Arbeitsraum 2 auf, in welchem ein Arbeitskolben 3 verschiebbar gelagert ist. Der Arbeitskolben 3 ist mit je einem nicht näher gekennzeichneten Zug- und Druckdämpfungsventil versehen und befindet sich am Ende einer abgedichtet aus dem Arbeitszylinder 1 herausgeführten hohlen Kolbenstange 4. Ein Kolbenstangen-Führungs- und Dichtungskomplex ist mit 5 gekennzeichnet.

Mit dem Arbeitsraum 2 steht ein Gasfederraum 6 in Verbindung, in welchem sich ein Gaspolster 7 befindet, das das Öl im Arbeitsraum 2 unter Druck setzt. Der Gasfederraum 6 enthält einen zur Trennung des Öls von dem Gaspolster 7 vorgesehenen an seinem Umfang abgedichtet geführten Trennkolben 8. Der Arbeitsraum 2 ist ferner von einem durch ein äußeres Mantelrohr 9 begrenzten Ölvorratsraum 10 mit freier Oberfläche zwischen Öl und Gas umgeben.

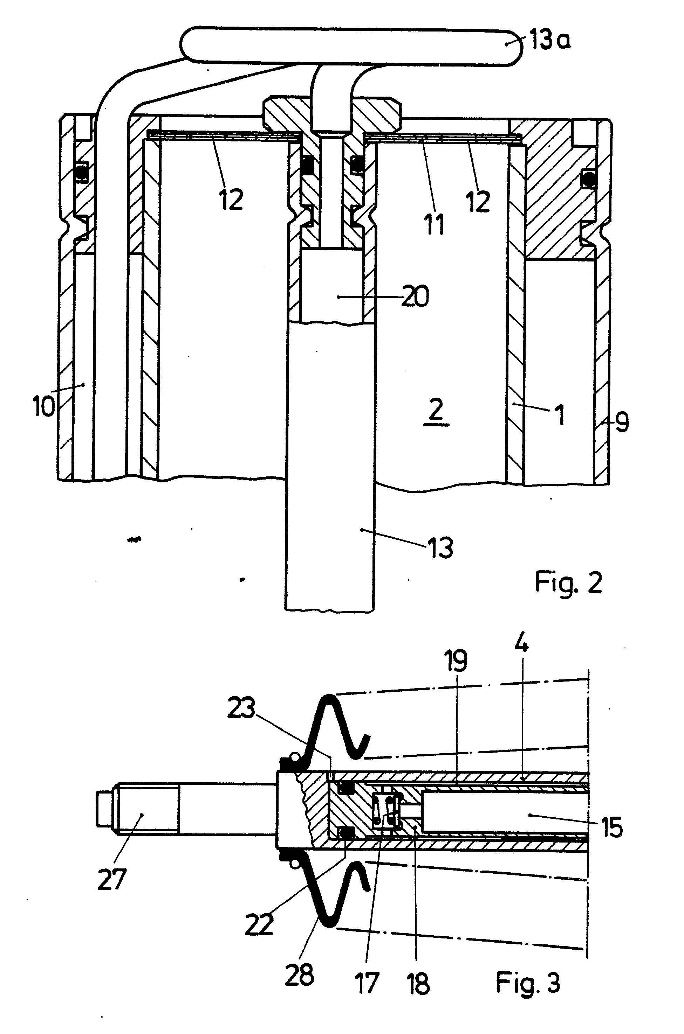

Das erfindungsgemäße Teleskop-Feder-Dämpferelement, welches vorzugsweise als Teleskop-Federbein verwendet wird, weist ferner eine Zwischenwand 11 zwischen Arbeitsraum 2 und Gasfederraum 6 auf (vgl. auch Fig. 2). Die Zwischenwand 11 ist im Bereich des Arbeitsraums 2 als Blattfederwand 11 ausgebildet und weist Durchtrittsöffnungen 12 zur Verbindung des Arbeitsraums 2 mit dem Gasfederraum 6 auf.

An der Zwischenwand 11 ist somit eine hohle Pumpenstange 13 elastisch gelagert, die an ihrem einen Ende über ein Pumpen-Ansaugrohr 13a mit dem Ölvorratsraum 10 unterhalb von dessen Ölspiegel in Verbindung steht und an ihrem anderen, mit einem Pumpen-Saugventil 14 versehenen Ende mit einem in der hohlen Kolbenstange 4 angeordneten Pumpenraum 15 zur Niveauregelung zusammenwirkt. Hierzu fördert die Pumpenstange 13 in Abhängigkeit von den Ein- bzw. Ausfederungsbewegungen Öl aus dem Ölvorratsraum 10 in den Arbeitsraum 2, während bei Überschreitung des Sollniveaus Öl aus dem Arbeitsraum 2 durch eine in der Pumpenstange 13 befindliche Steueröffnung 16 abfließen kann.

An dem von der Zwischenwand 11 entfernten Ende des Pumpenraums 15 ist ein Pumpen-Auslaßventil 17 (vgl. auch Fig. 3) in einer Steuerhülse 18 angeordnet, die sich im Kolbenstangenhohlraum 15 zwischen Kolbenstange 4 und Pumpenstange 13 befindet und bis zum Arbeitsraum 2 führende Durchtrittskanäle 19 bildet. Das der Zwischenwand 11 zugekehrte Ende der Steuerhülse 18 bildet eine Steuerkante für die Steueröffnung 16.

Das Pumpen-Ansaugrohr 13a zur Verbindung des Pumpenstangen-Hohlraums 20 mit dem Ölvorratsraum 10 unterhalb des Ölspiegels ist gegenüber den Bewegungen der Zwischenwand 11 nachgiebig ausgebildet, indem es zwischen seinen Befestigungen an der Zwischenwand 11 einerseits und dem Ölvorratsraum 10 andererseits als senkrecht zur Feder-Dämpferelement-Achse verlaufende Rohrspirale ausgebildet ist.

Der Trennkolben 8 weist an seiner der Zwischenwand 11 zugekehrten Stirnseite eine Ausnehmung 21 auf, in welcher bei Anordnung des Trennkolbens 8 im Bereich der Zwischenwand 11 das Pumpen-Ansaugrohr 13a aufnehmbar ist.

Wie besonders deutlich aus Fig. 2 ersichtlich, sind die beiden Befestigungen des Pumpen-Ansaugrohrs 13a an der Zwischenwand 11 in der Pumpenstange 13 einerseits und im Bereich des Ölvorratsraums 10 andererseits als abgedichtete Steckverbindungen ausgebildet.

Die Befestigung der Steuerhülse 18 im Kolbenstangen-Hohlraum 15 ist als abgedichtete Steckverbindung ausgebildet, wobei das von der Zwischenwand 11 abgekehrte Ende der Steuerhülse 18 außerhalb des Pumpen-Auslaßventils 17 eine Umfangsdichtung 22 gegenüber dem Kolbenstangen-Hohlraum 15 aufweist und stirnseitig gegen die benachbarte Stirnwand des Kolbenstangenhohlraums 15 anliegt, welcher eine endständige Entlüftungsöffnung 23 aufweist.

Die Befestigung des den Ölvorratsraum 10 abschließenden Bereichs der Zwischenwand 11 im Mantelrohr 9 ist als abgedichtete Steckverbindung ausgebildet.

Die Befestigungen der beiden endständigen Abschlußteile, nämlich Deckel 24 und Bolzen 25 des Stoßdämpfers im Mantelrohr 9 sind als abgedichtete Steckverbindungen ausgebildet.

Der Vollständigkeit halber sei noch erwähnt, daß mit 26 bzw. 27 die beiden Befestigungsbolzen zur Anlenkung des Stoßdämpfers an die durch ihn miteinander zu verbindenden Fahrzeugteile bezeichnet sind. Ferner ist mit 28 eine Schutzmanschette für das austretende Ende der Kolbenstange 4 gekennzeichnet.

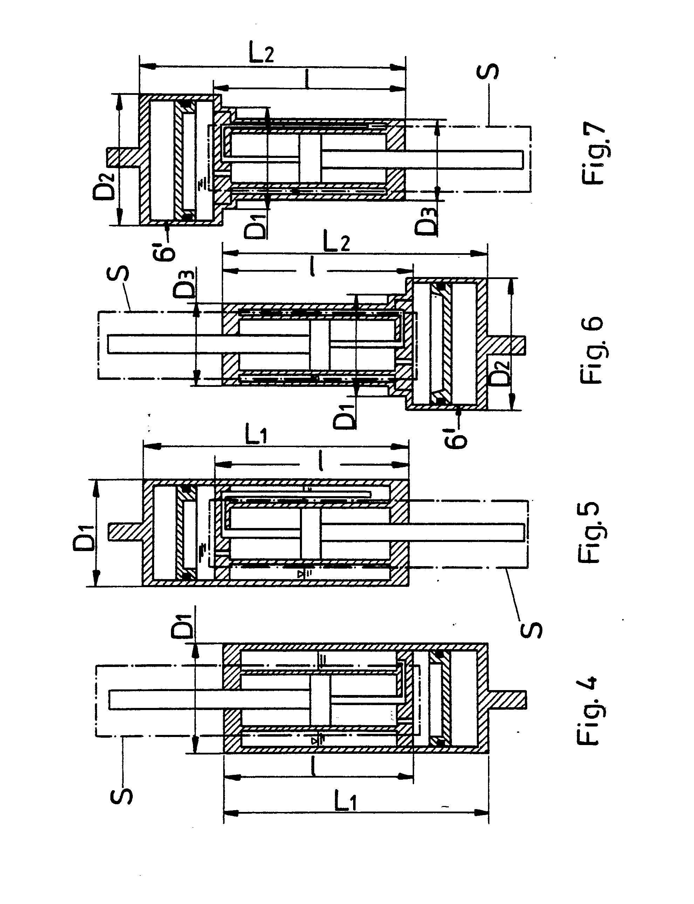

Vorteilhafterweise ist das erfindungsgemäße Teleskop-Feder-Dämpferelement mit innerer Niveauregelung als Baukastensystem aufgebaut. Es ergeben sich somit mit einfachen Mitteln die verschiedensten Anwendungsmöglichkeiten, wie durch die Fig. 4 bis 9 beispielsweise angedeutet.

Hierzu ist der den Arbeitsraum 2 enthaltende Arbeitszylinder 1 nebst zugehörigen Funktions-Baugruppen, insbesondere Arbeitskolben 3 mit Zug- und Druckdämpfungsventil, Kolbenstange 4 mit Pumpenraum 15, Steuerhülse 18 mit Pumpen-Auslaßventil 17, Pumpenstange 13 mit Pumpen-Saugventil 14, Kolbenstangen-Führungs- und Dichtungskomplex 5, als gleichbleibende Standard-Baugruppe S (in den Fig. 4 bis 9 strichpunktiert herausgehoben) ausgebildet, während die übrigen Funktions-Baugruppen, insbesondere Ölvorratsraum 10, Gasfederraum 6 mit Trennkolben 8, als entsprechend dem jeweiligen Anwendungsfall in Größe und/oder räumlicher Anordnung variable Baugruppen ausgebildet sind.

Folglich ergibt sich bei sämtlichen Ausführungen gemäß den Fig. 4 bis 9 die gleiche Fixlänge 1 und der gleiche Außendurchmesser $D_1$ der Standard-Baugruppe S.

Im einzelnen haben die Ausführungen nach den Fig. 4 und 5 die gleiche Gesamt-Fixlänge $L_1$ über welche auch der Außendurchmesser $D_1$ konstant bleibt. Die beiden Ausführungen unterscheiden sich jedoch dadurch, daß gemäß Fig. 4 der Einbau mit oben angeordneter Kolbenstange und gemäß Fig. 5 der Einbau mit unten angeordneter Kolbenstange in das Fahrzeug erfolgt. Entsprechend hat das Pumpen-Ansaugrohr 13a hinsichtlich seines Eintauchens in den Ölvorratsraum 10 bei der Ausführung nach Fig. 4 seine minimale Länge und bei der Ausführung nach Fig. 5 seine maximale Länge.

Bei den Ausführungen nach den Fig. 6 und 7 ergibt sich wiederum gleiche Gesamtfixlänge $L_2$, wobei die Längendifferenz zur Standard-Fixlänge 1 geringer sein kann als bei den Ausführungen nach den Fig. 4 und 5. Bei den Ausführungen nach den Fig. 6 und 7 ist ferner der Außendurchmesser $D_2$ des Gasfederraums 6' größer als der Standard-Außendurchmesser $D_1$. Ferner ist der Außendurchmesser $D_3$ des Ölvorratsraums 10 kleiner als der Standard-Durchmesser $D_1$. Das sich somit ergebende Mantelrohr 9' nebst den im Bereich des Gasfederraums 6' eingebauten Baugruppen der Fig. 6 und 7 ist in Fig. 6a im vergrößerten Detail dargestellt.

Die Ausführungen nach den Fig. 6 und 7 haben somit bei gleicher Standard-Baugruppe S eine gegenüber den Fig. 4 und 5 unterschiedliche Federkennlinienauslegung, so daß beispielsweise festliegende Übersetzungsverhältnisse (Radweg zu Federbeinweg) der Achs-/Federbeinanlenkungen berücksichtigt werden können. Im übrigen ist wie ersichtlich bei der Ausbildung nach Fig. 6 ein Einbau mit oben angeordneter Kolbenstange, bei der Ausbildung nach Fig. 7 ein Einbau mit unten angeordneter Kolbenstange im Fahrzeug vorgesehen.

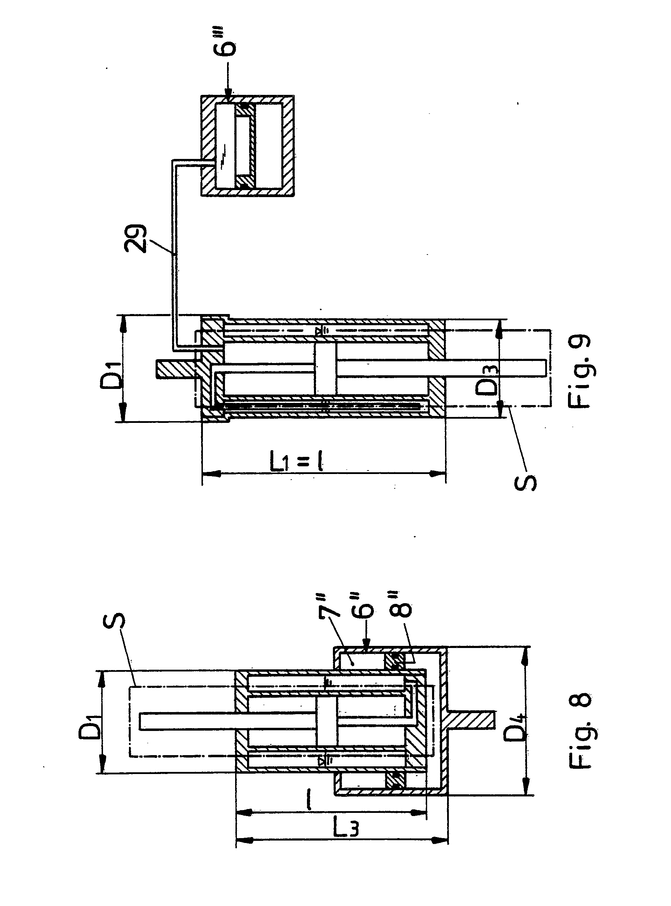

Das in Fig. 8 dargestellte Ausführungsbeispiel unterscheidet sich von den vorher beschriebenen Ausführungen dadurch, daß der Gasfederraum 6'' mit Trennkolben 8'' den Ölvorratsraum 10 teilweise umgibt. Hierdurch ergibt sich eine beträchtlich verringerte Gesamt-Fixlänge $L_3$, welche nur geringfügig größer als die Standard-Länge 1 ist. Andererseits ergibt sich jedoch ein gegenüber dem Standard-Durchmesser $D_1$ entsprechend vergrößerter Außendurchmesser $D_4$ des Gasfederraums 6''. Gemäß einer weiteren Abwandlung kann der Gasfederraum 6'' auch direkt den Arbeitszylinder 1 umgeben, beispielsweise in dem Fall, wenn der Ölvorratsraum 10 als gegenüber der Standard-Baugruppe S separate Baugruppe (ähnlich dem Gasfederraum 6''' gemäß Fig. 9) ausgebildet ist.

Bei der Ausführungsform nach den Fig. 9 und 9a ist, wie bereits vorstehend angedeutet, der Gasfederraum 6''' als gegenüber der Standard-Baugruppe S separate Baugruppe ausgebildet und mit dem Arbeitsraum 1 durch eine Rohrleitung 29 verbindbar. Bei dieser Ausführung ergibt sich eine minimale Gesamt-Baulänge von $L_1$, welche der Standard-Baulänge 1 entspricht.

Vor allem die Ausführungsbeispiele gemäß den Fig. 8 und 9 ergeben auf einfache Weise die Möglichkeit einer optimalen Anpassung des erfindungsgemäßen niveauregelnden Teleskop-Feder-Dämpferelements an die tatsächlichen vorhandenen Einbauräume in den Fahrzeugen. Andererseits sind wie ersichtlich auch diese Ausführungsformen variabel in der Federkennlinienauslegung. Der Vollständigkeit halber sei noch erwähnt, daß die Ausführungen nach den Fig. 8 und 9 gleichfalls auch umgekehrt wie dargestellt, also mit unten bzw. oben angeordneter Kolbenstange einbaubar sind.

Das in den Fig. 4 bis 9 veranschaulichte Baukastensystem beinhaltet im übrigen den besonders wesentlichen Vorteil, daß die in der Fertigung relativ teure Standard-Baugruppe S als gleichbleibende Baugruppe ausgebildet ist, wobei bei einer derartigen Standardisierung in verstärktem Maße Herstellungskosten eingespart werden.

Generell kann also die Standard-Baugruppe praktisch genormt werden, während die übrigen Baugruppen, also lediglich der Gasfederraum mit Trennkolben und der Ölvorratsraum nebst zugehörigen Deckel bzw. Boden den jeweiligen Erfordernissen (Bauraum, Federkennlinienauslegung) angepaßt zu werden brauchen.

**Patentansprüche**

1. Selbstpumpendes hydropneumatisches Teleskop-Feder-Dämpferelement mit innerer Niveauregelung für Fahrzeuge, insbesondere Kraftfahrzeuge, mit einem Arbeitszylinder (1) mit einem ölgefüllten Arbeitsraum (2) mit einem darin verschiebbar gelagerten, mit Dämpfungseinrichtungen versehenen Arbeitskolben (3) am Ende einer abgedichtet aus dem Arbeitszylinder (1) herausgeführten hohlen Kolbenstange (4), einem in einem mit dem Arbeitsraum (2) in Verbindung stehenden Gasfederraum (6) angeordneten, das Öl im Arbeitsraum (2) unter Druck setzenden Gaspolster (7), einem, insbesondere den Arbeitsraum (2) umgebenden, durch ein äußeres Mantelrohr (9) begrenzten Ölvorratsraum (10) mit freier Oberfläche zwischen Öl und Gas und einer an einer Zwischenwand (11) elastisch gelagerten hohlen Pumpenstange (13), die an ihrem einen Ende mit dem Ölvorratsraum (10) unterhalb von dessen Ölspiegel in Verbindung steht und an ihrem anderen, mit einem Pumpen-Saugventil (14) versehenen Ende mit einem in der hohlen Kolbenstange (4) angeordneten Pumpenraum (15) zur Niveauregelung zusammenwirkt, indem sie in Abhängigkeit von den Ein- bzw. Ausfederungsbewegungen Öl aus dem Ölvorratsraum (10) in den Arbeitsraum (2) fördert, während bei Überschreitung des Sollniveaus Öl aus dem Arbeitsraum (2) in den Ölvorratsraum (10), insbesondere durch eine in der Pumpenstange (13) vorgesehene Steueröffnung (16), abfließen kann, wobei ein Pumpen-Auslaßventil (17) an dem von der Zwischenwand entfernten Ende des Pumpenraums (15) in einer Steuerhülse (18) angeordnet ist, die sich im Kolbenstangenhohlraum zwischen Kolbenstange (4) und Pumpenstange (13) befindet, mit der Kolbenstange (4) vom Pumpen-Auslaßventil bis zum Arbeitsraum (2) führende Durchtrittskanäle bildet und deren der Zwischenwand (11) zugekehrtes Ende insbesondere eine Steuerkante für die Steueröffnung bildet, und wobei im Gasfederraum (6) im Bereich der Oberfläche zwischen Öl und Gas ein Trennkörper (8) aus massivem Werkstoff beweglich angeordnet ist, dadurch gekennzeichnet, daß die Zwischenwand (11) selbst im Bereich des Arbeitsraums (2) elastisch ausgebildet ist und ein Pumpen-Ansaugrohr (13a) zur Verbindung des Pumpenstangen-Hohlraums (20) mit dem Ölvorratsraum (10) unterhalb des Ölspiegels trägt, welches gegenüber den Bewegungen der Zwischenwand (11) nachgiebig ausgebildet ist.

2. Teleskop-Feder-Dämpferelement nach Anspruch 1, dadurch gekennzeichnet, daß die Zwischenwand (11) im Bereich des Arbeitsraumes (2) als Blattfederwand und das Pumpen-Ansaugrohr (13a) zwischen seinen Befestigungen an der Zwischenwand (11) einerseits und dem Ölvorratsraum (10) andererseits als senkrecht zur Stoßdämpfer-Achse verlaufende Rohrspirale ausgebildet ist.

3. Teleskop-Feder-Dämpferelement nach Anspruch 2, dadurch gekennzeichnet, daß die beiden Befestigungen des Pumpen-Ansaugrohrs (13a) als abgedichtete Steckverbindungen ausgebildet sind.

4. Teleskop-Feder-Dämpferelement nach einem der Ansprüche 1 bis 3, dadurch gekennzeichnet, daß die Befestigung der Steuerhülse (18) im Kolbenstangen-Hohlraum (15) als abgedichtete Steckverbindung ausgebildet ist, wobei das von der Zwischenwand (11) abgekehrte Ende der Steuerhülse (18) außerhalb des Pumpen-Auslaßventils (17) eine Umfangsdichtung (22) gegenüber dem Kolbenstangen-Hohlraum (15) aufweist und stirnseitig gegen die benachbarte Stirnwand des Kolbenstangen-Hohlraums (15) anliegt, welcher dort eine endständige Entlüftungsöffnung (23) aufweist.

5. Teleskop-Feder-Dämpferelement nach einem der Ansprüche 1 bis 4, dadurch gekennzeichnet, daß die Befestigung des den Ölvorratsraum (10) abschließenden Bereichs der Zwischenwand im Mantelrohr (9, 9') als abgedichtete Steckverbindung ausgebildet ist.

6. Teleskop-Feder-Dämpferelement nach einem der Ansprüche 1 bis 5, dadurch gekennzeichnet, daß die Befestigung wenigstens einer der beiden endständigen Abschlußteile (Deckel (24) und Boden (25)) des Stoßdämpfers im Mantelrohr (9, 9') als abgedichtete Steckverbindung ausgebildet ist.

7. Teleskop-Feder-Dämpferelement nach einem der Ansprüche 1 bis 6, dadurch gekennzeichnet, daß er als Baukastensystem aufgebaut ist, wobei der den Arbeitsraum (2) enthaltende Arbeitszylinder (1) nebst zugehörigen Funktions-Baugruppen, insbesondere Arbeitskolben (3) mit Zug- und Druckdämpfungsventil, Kolbenstange (4) mit Pumpenraum (15), Steuerhülse (18) mit Pumpen-Auslaßventil (17), Pumpenstange (13) mit Pumpen-Saugventil (14), Kolbenstangen-Führungs- und Dichtungskomplex (5), als gleichbleibende Standard-Baugruppe (S) ausgebildet ist und die übrigen Funktions-Baugruppen, insbesondere Ölvorratsraum (10), Gasfederraum (6, 6', 6'', 6''') mit Trennkolben (8, 8', 8'', 8'''), als entsprechend dem jeweiligen Anwendungsfall in Größe und/oder räumlicher Anordnung variable Baugruppen ausgebildet sind.

8. Teleskop-Feder-Dämpferelement nach Anspruch 7, dadurch gekennzeichnet, daß der Gasfederraum (6'') mit Trennkolben (8'') den Ölvorratsraum (10) bzw. den Arbeitszylinder (1), zumindest teilweise, umgibt.

9. Teleskop-Feder-Dämpferelement nach Anspruch 7 oder 8, dadurch gekennzeichnet, daß der Gasfederraum (6''') mit Trennkolben (8''')

und/oder Ölvorratsraum als gegenüber der Standard-Baugruppe separat angeordnete Baugruppen mit dem Arbeitsraum (2) durch jeweils eine Rohrleitung (29) verbindbar sind.

## Claims

1. Self-pumping hydropneumatic telescopic spring damping unit with internal level control for vehicles, especially motor vehicles, with a working cylinder (1) having an oil-filled working chamber (2) with a working piston (3) mounted to slide in it and provided with damping means, the piston being on the end of a hollow piston rod (4) extending out of the cylinder through a seal, a gas cushion (7) arranged in a gas spring chamber (6) which communicates with the working chamber (2), the cushion putting the working chamber (2) under pressure, an oil compensating chamber (10) in particular surrounding the working chamber (2) and defined by an outer sleeve-like tube (9), and having a free interface between oil and gas, and a hollow pump rod (13) resiliently mounted on an intermediate wall (11) and being in communication at its one end with the oil compensating chamber (10) below the level of the oil in the latter and co-operating at its other end, which is provided with a pump suction valve (14), with a pump chamber (15) arranged within the hollow piston rod (4) to regulate the level, in that it delivers oil from the oil compensating chamber (10) into the working chamber (2) in accordance with inward and outward spring movements, whilst when the desired level is exceeded oil can flow back from the working chamber (2) into the oil compensating chamber (10), in particular through a control orific (16) provided in the pump rod (13), a pump delivery valve being provided in a control sleeve (18) at that end of the pump chamber (15) which is furthest from the intermediate wall, the sleeve being present in the hollow space in the piston rod between the piston rod (4) and the pump rod (13), forming with the the piston rod (4) passages leading from the pump outlet valve to the working chamber (2) and of which the end which is nearest the intermediate wall (11) forms in particular a controlling lip for the control orifice, and a separating body (8) of solid material being movably arranged in the gas spring space (6) in the region of the interface between the oil and the gas, characterised in that, the intermediate wall (11) itself is made resilient in the region of the working chamber (2) and carries a pump suction pipe (13a) for connecting the hollow interior (20) of the pump rod to the oil compensating chamber (10) below the oil level, which pipe is made to yield with respect to the movements of the intermediate wall (11).

2. Telescopic spring damping unit according to claim 1, characterised in that, the intermediate wall (11) is formed in the region of the working chamber (2) as a leaf spring wall and the pump suction pipe (13a) is formed between its attachments to the intermediate wall (11) on the one hand and the oil compensating chamber (10) on the other hand as a spiral tube extending perpendicular to the axis of the damper.

3. Telescopic spring damping unit according to claim 2, characterised in that, the two attachments of the pump suction pipe (13a) are formed as sealed plug connections.

4. Telescopic spring damping unit according to one of claims 1 to 3, characterised in that, the mounting of the control sleeve (18) within the interior (15) of the piston rod is formed as a sealed plug connection, the end of the control sleeve (18) which is furthest from the intermediate wall (11) having a peripheral seal (22) sealing it with respect to the hollow interior (15) of the piston rod outside the pump delivery valve (17) and engaging at its end face against the adjacent end face of the hollow interior (15) of the piston rod, which at that point has an end-mounted air venting orifice (13).

5. Telescopic spring damping unit according to one of claims 1 to 4, characterised in that, the mounting of the region of the intermediate wall which closes the end of the oil compensating chamber (10) in the outer sleeve-like tube (9, 9') is in the form of a sealed plug connection.

6. Telescopic spring damping unit according to one of claims 1 to 5, characterised in that, the mounting of at least of the two end-mounted closure components (cover (24) and base (25)) of the damper in the outer sleeve-like tube (9, 9') is in the form of a sealed plug connection.

7. Telescopic spring damping unit according to one of claims 1 to 6, characterised in that, it is constructed as a modular system, the working cylinder (1) containing the working chamber (2) together with its associated operative units, in particular the working piston (3) with its extension-phase and compression-phase damping valves, piston rod (4) with its pump chamber (15), control sleeve (18) with its pump delivery valve (17), pump rod (13) with its pump suction valve (14), piston rod guiding and seal assembly (5), is formed as a self-contained standard assembly (S) and the remaining functional units, in particular the oil compensating chamber (10), and gas spring chamber (6, 6', 6'', 6''') together with the separating piston (8, 8', 8'', 8'''), are formed as variable units in accordance with the requirements of use with regard to size and/or spatial layout.

8. Telescopic spring damping unit according to claim 7, characterised in that, the gas spring chamber (6'') together with the separating piston (8'') at least partially surrounds the oil compensating chamber (10) and the working cylinder (1).

9. Telescopic spring damping unit according to claim 7 or 8, characterised in that, the gas spring chamber (6''') together with the separating piston (8''') and/or the oil compensating chamber are capable of being connected to the working chamber (2) through a respective pipe connection (29) as a sub-assembly or unit arranged separately from the standard assembly or unit.

## Revendications

1. Unité télescopique hydropneumatique auto-pompante de suspension et amortissement comportant un contrôle d'assiette intérieur, pour véhicules, notamment pour véhicules automobiles, présentant: un cylindre de travail (1) avec chambre de travail (2) remplie d'huile et dans laquelle peut coulisser un piston de travail (3) muni de moyens d'amortissement et situé à l'extrémité d'une tige de piston (4) creuse sortant, avec étanchéité, du cylindre de travail (1); un coussin de gaz (7) qui est agencé dans une chambre de ressort à gaz (6) communiquant avec la chambre de travail (2) et qui met sous pression l'huile dans cette chambre de travail (2); une chambre de réserve d'huile (10) qui, notamment, entoure la chambre de travail (2) et qui est délimitée par un tube-enveloppe extérieur (9), une surface libre existant entre huile et gaz; et une tige de pompe creuse (13) qui est élastiquement portée par une paroi intermédiaire (11) et qui, en sa première extrémité, communique avec la chambre de réserve d'huile (10), cela en dessous de la surface de l'huile contenue dans celle-ci, et qui, en son autre extrémité munie d'une valve d'aspiration de pompe (14), coopère avec une chambre de pompe (15) agencée dans la tige de piston creuse (4), pour la régulation de niveau effectuée par le fait qu'elle refoule dans la chambre de travail (2) de l'huile provenant de la chambre de réserve d'huile (10), cela en fonction des mouvements de contraction ou d'élongation, tandis que, en cas de dépassement du niveau de consigne, de l'huile peut s'écouler de la chambre de travail (2) à la chambre de réserve d'huile (10), notamment par une ouverture de commande (16) prévue dans la tige de pompe (13), une valve de décharge de pompe agencée dans une douille de commande (18) située à celle des extrémités de la chambre de pompe (15) qui est éloignée de la paroi intermédiaire, cette douille de commande (18) se trouvant dans la cavité de tige de piston, entre tige de piston (4) et tige de pompe (13), et formant avec la tige de piston (4) des canaux de passage de la valve de décharge de pompe à la chambre de travail (2), le bout de cette douille (18) tourné vers la paroi intermédiaire (11) formant notamment une arête de commande pour commander l'ouverture de commande, un corps séparateur (8) en une matière pleine étant agencé avec possibilité de mouvement dans la chambre de ressort à gaz (6), dans la région de la surface entre huile et gaz, caractérisée en ce que la paroi intermédiaire (11) est elle-même dotée d'élasticité dans la région de la chambre de travail (2) et porte un tube d'aspiration de pompe (13a) pour relier la cavité (20) de tige de pompe à la chambre de réserve d'huile (10), en dessous de la surface de l'huile, ce tube d'aspiration étant doté de flexibilité à l'égard des mouvements de la paroi intermédiaire (11).

2. Unité télescopique selon la revendication 1, caractérisée en ce que la paroi intermédiaire (11) dans la région de la chambre de travail (2) est réalisée en tant que paroi élastique lamellaire, et le tube d'aspiration de pompe (13a), entre ses fixations à la paroi intermédiaire (11), d'une part, et à la chambre de réserve d'huile (10), d'autre part, présente la configuration d'une spirale tubulaire suivant un tracé perpendiculaire à l'axe de l'amortisseur.

3. Unité télescopique selon la revendication 2, charactérisée en ce que les deux fixations du tube d'aspiration de pompe (13a) sont réalisées en tant que jonctions à emboîtement étanchées.

4. Unité télescopique selon l'une des revendications 1 à 3, caractérisée en ce que la fixation de la douille de commande (18) dans la cavité (15) de tige de piston est réalisée en tant que jonction à emboîtement étanchée, celle des extrémités de la douille de commande (18) qui n'est pas tournée vers la paroi intermédiaire (11) présentant un joint d'étanchéité périmétrique (22) pour étanchéité vis-à-vis de la cavité (15) de la tige de piston et s'appliquant par son bout contre la paroi terminale voisine que comporte cette cavité (15), laquelle cavité présente une ouverture d'évent (23) située à son extrémité.

5. Unité télescopique l'une des revendications 1 à 4, caractérisée en ce que la fixation, dans le tube-enveloppe (9, 9'), de la zone de la paroi intermédiaire (11) fermant la chambre de réserve d'huile (10) est réalisée en tant que jonction à emboîtement étanchée.

6. Unité télescopique selon l'une quelconque des revendications 1 à 5, caractérisée en ce que la fixation, dans le tube-enveloppe (9, 9') d'au moins l'une des deux pièces de fermeture (couvercle (24) et fond (25)) situées aux extrémités de l'amortisseur est réalisée en tant que jonction à emboîtement étanchée.

7. Unitée télescopique selon l'une des revendications 1 à 6, caractérisée en ce qu'elle est construite en tant que système modulaire, le cylindre de travail (1) contenant la chambre de travail (2), combiné aux groupes fonctionnels y afférents, notamment au piston de travail (3) avec valve d'amortissement de traction et poussée, à la tige de piston (4) avec chambre de pompe (15), à la douille de commande (18) avec valve (17) de décharge de pompe, à la tige de pompe (13) avec valve d'aspiration de pompe (14), à l'ensemble (5) de guidage-étanchéité de tige de piston, étant réalisé en tant que groupe constitutif standard uniforme (S), alors que les autres groupes fonctionnels, notamment la chambre de réserve d'huile (10), la chambre de ressort à gaz (6, 6', 6'', 6''') avec piston séparateur (8, 8', 8'', 8''') sont réalisés en tant que groupes dont la taille et/ou l'agencement spatial varient en fonction de chaque cas d'application.

8. Unité télescopique selon la revendication 7, caractérisée en ce que la chambre du ressort à gaz (6'') avec piston séparateur (8'') entoure au moins partiellement la chambre de réserve d'huile (10) ou, selon le cas, le cylindre de travail (1).

9. Unité télescopique selon la revendication 7 ou 8, caractérisée en ce que la chambre du ressort à gaz (6''') avec piston séparateur (8''') et/ou la chambre de réserve d'huile peuvent, en tant que groupes constitutifs agencés séparément du groupe constitutif standard, être reliés à la chambre de travail (2) par une conduite tubulaire (29).

Fig. 9a

Fig. 1

Fig. 6a

Fig. 2

Fig. 3

Fig. 4          Fig. 5          Fig. 6          Fig. 7

Fig. 9

Fig. 8